Europäisches Patentamt

European Patent Office

Office européen des brevets

(11) Publication number: **0 057 299**
A1

# EUROPEAN PATENT APPLICATION

(21) Application number: **81300298.7**

(22) Date of filing: **22.01.81**

(51) Int. Cl.³: **A 23 L 1/31**

(43) Date of publication of application: **11.08.82**
Bulletin 82/32

(84) Designated Contracting States: **AT BE CH DE FR IT LI LU NL SE**

(71) Applicant: **PROTEIN FOODS (U.K.) LIMITED, Factory Road, Tipton Staffordshire (GB)**

(72) Inventor: **Whittle, Mark Thomas, Garden Cottage, Farmcote Nr. Bridgnorth Shropshire (GB)**

(74) Representative: **Pett, Christopher Phineas et al, Frank B. Dehn & Co. European Patent Attorneys Imperial House 15-19 Kingsway, London WC2B 6UZ (GB)**

(54) Dehydrated beef products, a method for preparing them and meat products containing them.

(57) A dehydrated, bacteriologically stable connective tissue product having a water content of less than 10% by weight, a fat content of less than 10% by weight and a particle size of less than 5 mm is described which is capable of inclusion in meat products, especially those for human consumption. The connective tissue is preferably derived from beef. A process for preparing the product by drying the connective tissue in air, oil or by combination of air and oil drying methods is also disclosed.

EP 0 057 299 A1

"Dehydrated beef products, a method for preparing them and meat products containing them."

This invention concerns improvements in additives for food products.  More particularly, it concerns such additives which are manufactured from animal connective tissue, particularly from beef.  Such tissue includes material known as "paddiwak" which is a neck connective tissue, but also includes all connective tissue e.g. gristle and ligaments which connect meat with bone, bone with bone or meat with meat.

Connective tissue in comminuted form is used in the meat industry in some meat products, for example hamburgers.  It provides an economical source of protein, and may be employed in varying proportions depending on the legally permitted amount for that product.  However, because of its nature the material is extremely difficult to use successfully.  It can only be used if it has been extensively processed e.g. by boiling or emulsification or by a combination of both.  As a result, it has only been used in small proportions to the total product to supplement meat protein in products at the lower quality end of the market.  Much more often than not the material has simply been discarded and has in many cases not even found application in animal foods. This has resulted in the discarding of large quantities of protein at a time when the need to utilise all possible sources of protein is increasing.

Any processing of the connective tissue that occurs is a time-consuming and labour-intensive operation. The manufacturer must accurately predict his requirements for the tissue in order to avoid the loss of inexpensive protein derived from the tissue which would either have to be replaced by other sources of protein, normally more expensive, or not be replaced at all.

It has now been found that it is possible to process connective tissue into a dehydrated powder form in which it is micro-biologically stable for extended periods and can readily and rapidly be rehydrated into a usable high-protein form. In powder form, the product is highly suitable as a protein supplement for inclusion in, for example, comminuted meat products that are suitable for human consumption.

According to one aspect of the present invention there is provided a dehydrated, bacteriologically stable, connective tissue product having a water content of less than 10% by weight, a fat content of less than 10% by weight, and a particle size of less than 5mm, the dehydrated product being capable of inclusion in a meat product.

Water content may be assayed by placing a weighed sample of the material in a constant temperature oven at 105°C for four hours, allowing the sample to cool in a desiccator, reweighing and then calculating the percentage loss of moisture.

Fat content may be assayed by solvent extraction, e.g. with petroleum spirit.

The water content is preferably in the range 4 to 9% by weight, typically from 4 to 6% by weight. The fat content is generally in the range 2 to 5%. It is preferred that the water and fat contents be as low as possible, consistent with the production of a substantially stable product.

The dehydrated product is mainly protein, this typically constituting between 80 and 96% by weight as calculated from the nitrogen content (protein content = nitrogen content x 6.25). The nitrogen content may be assayed in conventional manner e.g. after digesting a sample with sulphuric acid using a catalytic mixture of copper sulphate and sodium sulphate.

The particle size is of great importance to the properties of the product when included in a comminuted meat product. Rehydration speed decreases as particle size increases. For most purposes, in order to combine rehydratability with ease of handling, a particle size in the range from 0.005 to 2 mm is preferable, a range of from 0.005 to 0.5 mm being even more preferable.

The dehydrated product has an appearance like that of talc, but is pale to dark brown.

The dehydrated product can be stored for several months without refrigeration in ambient temperatures of 13-19°C.

The dehydrated product may be manufactured, according to another aspect of the invention, by drying fresh connective tissue to a water content of less than 10% with simultaneous removal of fat to a fat content of less than 10%, rapidly cooling the product and comminuting the product to a particle size of less than 5 mm.

The product may be dehydrated in a variety of ways employing heat or cold. Air, oil, or a combination of both air and oil methods may be used at elevated temperature prior to cooling, or the product may be freeze dried. Dehydration is preferably carried out at from 80 to 150°C.

The dehydration may be effected at reduced pressure, in which case lower temperatures may be employed. If desired part of the dehydration may be effected at reduced pressure and part at atmospheric pressure.

The temperature must be carefully controlled at all stages of production to prevent degradation. In order to ensure reasonably rapid dehydration, an air temperature in the upper limits of the range previously indicated is preferred for the initial stage of the dehydration. High temperature has been found to be disadvantageous as it tends to prevent rehydration of the product. At the same time, a proportion of the fat originally present in the product is rendered off, and removed.

As the water content of the product falls, the temperature of dehydration may be reduced and should be carefully controlled in order to prevent degradation of the product.

It is possible to reduce the moisture content down to the final value (typically 4-6%) by careful drying. It may be preferable to control the final drying stage, particularly if this is carried out in heated oil, for example in a steam-heated rendering vessel. When the required moisture content has been reached, the excess oil is drained away.

The product may, if so desired, be centrifuged or treated with a food grade oil solvent or both in order to reduce further the fat and oil content.

After dehydration, the product should be cooled as rapidly as possible in minimum contact with the atmosphere. In batch processes it may be convenient to cool first to ambient temperature before effecting further processing.

The adjustment of particle size will generally take place after dehydration has been completed, though it may be convenient to effect at least some adjustment in particle size before dehydration in order to facilitate the carrying out of the dehydration process. Where the final adjustment in particle size is effected after completion of the dehydration, the dehydrated product may be comminuted at ambient temperature (13-19°C) or, alternatively it may be frozen prior to comminution. Although freezing may be effected in a refrigerator or freezer, it has been found to be preferable to effect this by treatment with a cryogenic medium e.g. a solid or liquid gas, particularly solid carbon dioxide or liquid nitrogen.

Freezing with the cryogenic medium appears to result in a microcrystalline-like structure of the dehydrated product as a result of the rapid fall in temperature. Such a structure is readily broken down on comminution and lubrication effects, due to the fat, do not occur in the comminutor while the product is in a frozen state. The resulting comminuted product may then be stored at ambient temperature.

The dehydrated product may be added to fresh meat products, for example hamburgers and sausages. It may be added to baked meat products such as pies, cooked meats, canned meat products (e.g. canned hamburgers) pastes and soups. The product will absorb at least its own weight in moisture in such products and will retain it during subsequent heat processing. At the small particle sizes employed, it has the advantage of being practically indiscernible in the comminuted meat product though the protein content of the meat product will be greatly increased.

It may also be incorporated into products containing meat but which are not in themselves meat products, e.g. dried products such as dried soups. The dehydrated product may be added, without previous rehydration, to such products providing that during a processing cycle rehydration occurs before consumption.

The quantity of the product which is added to food stuffs containing meat will depend on the permitted requirements being met in the finished product. Generally speaking, in the U.K. for example, not more than 5% by weight, calculated on the meat, will suffice, though in other countries larger quantities e.g. up to 20% may be permitted.

It will be understood that the dehydrated product may be blended, if desired, with other materials, additives, stabilisers and emulsifiers employed in the food processing art, e.g. vegetable proteins, animal proteins, or products normally associated with or added to meat products and products containing meat.

It is a particular advantage of the dehydrated product according to the invention that is has a long storage life at ambient temperatures. The presence of antioxidants and preservatives is not generally necessary, although these may be added in the concentrations customarily employed if the storage conditions are particularly severe.

In order that the invention may be better understood, the following example is given by way of illustration.


Example

A. Manufacture of dehydrated connective tissue

1000 kg beef neck connective tissue is comminuted into pieces of approximately 1 square inch in surface area, though this measurement is not critical.

The tissue is then transferred to oil (or fat) contained in a heated vessel. The tissue and oil (or fat) are constantly stirred at a temperature of about 125°C until the moisture content is reduced to the desired final value of about 4-6%.

The now dehydrated tissue is removed from the oil (or fat), is drained and is then spun to remove still further oil (or fat). The tissue is then transferred to a closed vessel and liquid nitrogen is blown into it in order to reduce the temperature rapidly.

The resulting product is immersed in liquid nitrogen at about -75°C for 3-6 minutes and is then ground to produce a final product having a particle size of about 0.1 mm.

## CLAIMS

1.    A dehydrated, bacteriologically stable, connective tissue product having a water content of less than 10% by weight, a fat content of less than 10% by weight, and a particle size of less than 5 mm, the dehydrated product being capable of inclusion in a meat product.

2.    A product as claimed in claim 1 having a water-content of from 4 to 9% by weight and a fat content of from 2 to 5% by weight.

3.    A product as claimed in either of claims 1 and 2 having a particle size of from 0.005 to 2mm.

4.    A product as claimed in claim 1 substantially as hereinbefore described.

5.    A process for the preparation of a dehydrated, bacteriologically stable connective tissue product as claimed in claim 1 which comprises drying fresh connective tissue to a water content of less than 10% with simultaneous removal of fat to a fat content of less than 10%, rapidly cooling the product and comminuting the product to a particle size of less than 5 mm.

6.    A process as claimed in claim 5 wherein drying is effected using air, oil or a combination of air and oil drying methods at elevated temperature.

7.    A process as claimed in claim 5 or claim 6 wherein drying is effected at from $80^{\circ}$ to $150^{\circ}$C.

8.    A process as claimed in any of claims 5 to 7 wherein some adjustment in particle size is effected prior to drying.

9.    A process as claimed in any of claims 5 to 8 wherein the final adjustment of particle size is effected after freezing the product in a cryogenic medium.

10. A process as claimed in claim 5 substantially as hereinbefore described.

11. A process as claimed in claim 5 substantially as hereinbefore described with reference to the accompanying Example.

12. A meat product containing a proportion of a product as claimed in any of claims 1 to 4.

## EUROPEAN SEARCH REPORT

| | DOCUMENTS CONSIDERED TO·BE RELEVANT | | | CLASSIFICATION OF THE APPLICATION (Int. Cl.³) |
|---|---|---|---|---|
| Category | Citation of document with indication, where appropriate, of relevant passages | Relevant to claim | | |
| | AT - B - 336 382 (PROTEIN FOODS)<br>* claims 1 to 4 and 7; page 4,<br>lines 15 to 17; example 1 *<br>& US - A - 3 922 377<br>-- | 1-3,<br>5-10 | | A 23 L 1/31 |
| A | US - A - 4 163 804 (R.H. MEYER et al.)<br>-- | | | |
| A | FR - A1 - 2 412 266 (BLUE WING CORP.)<br>& US - A - 4 259 361<br>---- | | | |

| | TECHNICAL FIELDS SEARCHED (Int. Cl.³) |
|---|---|
| | A 23 L 1/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims |
|---|---|

| Place of search | Date of completion of the search | Examiner |
|---|---|---|
| Berlin | 02-07-1981 | SCHULTZE |

EPO Form 1503.1 06.78